# EUROPEAN PATENT APPLICATION

(11) **EP 2 940 265 A1**
(43) Date of publication of application: **04.11.2015**
(21) Application number: 12891274.8
(22) Date of filing: 26.12.2012
(51) Int. Cl.: F01N 3/20, F01N 3/023, F01N 3/025, F01N 3/029, F01N 3/08, F01N 3/24

(54) **EXHAUST PURIFICATION SYSTEM FOR INTERNAL COMBUSTION ENGINE**

(71) Applicant: TOYOTA JIDOSHA KABUSHIKI KAISHA, Toyota-shi, Aichi-ken, 471-8571 (JP)
(72) Inventor: MIKAMI, Akira, Toyota-shi Aichi 471-8571 (JP); NAKAYAMA, Shigeki, Toyota-shi Aichi 471-8571 (JP); OHASHI, Nobumoto, Toyota-shi Aichi 471-8571 (JP); TAKADA, Keishi, Toyota-shi Aichi 471-8571 (JP); SAKURAI, Kenji, Toyota-shi Aichi 471-8571 (JP); TSUKAMOTO, Yoshihisa, Toyota-shi Aichi 471-8571 (JP); OTSUKI, Hiroshi, Toyota-shi Aichi 471-8571 (JP); MATSUO, Junichi, Toyota-shi Aichi 471-8571 (JP); YAMAMOTO, Ichiro, Toyota-shi Aichi 471-8571 (JP)
(74) Representative: Smith, Samuel Leonard
(86) International application number: PCT/JP2012/083659
(87) International publication number: WO 2014/102932

(57) **Abstract**

An object of the present invention is to suppress a reduction in a NO_{X} purification ratio accompanying filter regeneration processing in an exhaust gas purification system for an internal combustion engine that includes a filter carrying an SCR catalyst. In the present invention, the temperature of the filter is increased following completion of the filter regeneration processing by increasing the temperature of exhaust gas discharged from the internal combustion engine, and in so doing, HC adhered to the filter is removed.

## Description

### [TECHNICAL FIELD]

The present invention relates to an exhaust gas purification system for an internal combustion engine.

### [BACKGROUND ART]

Conventionally, an apparatus in which a selective catalytic reduction NOx catalyst (referred to hereafter as an SCR catalyst) is carried on a filter has been developed as an exhaust gas purification apparatus provided in an exhaust passage of an internal combustion engine. The filter traps particulate matter (referred to hereafter as PM) contained in the exhaust gas. The SCR catalyst reduces NO_{X} contained in the exhaust gas using ammonia (NH₃) as a reducing agent. A filter carrying this type of SCR catalyst will be referred to hereafter as an SCRF.

By employing an SCRF as an exhaust gas purification apparatus, a size of the exhaust gas purification apparatus can be reduced in comparison with a case where the filter and the SCR catalyst are provided separately in the exhaust passage. As a result, the exhaust gas purification apparatus can be mounted more easily. Moreover, when an SCRF is employed, the SCR catalyst can be disposed further upstream in the exhaust passage. When the SCR catalyst is disposed further upstream in the exhaust passage, the SCR catalyst is more likely to be heated by heat from the exhaust gas. As a result, the SCR catalyst can be heated more easily, and a NO_{X} purification ratio (a ratio of an amount of NO_{X} reduced in the SCR catalyst relative to an amount of NO_{X} flowing into the SCRF) of the SCR catalyst can be improved.

Patent Literature 1 discloses a configuration in which an oxidation catalyst, an injector, an SCRF, and a slip oxidation catalyst are provided in an exhaust passage of a diesel engine in sequence from an upstream side of an exhaust gas flow. The injector is an apparatus that injects ammonia or an ammonia precursor into the exhaust gas. The slip oxidation catalyst is a catalyst for oxidizing ammonia that slips out of the SCRF.

Here, the trapped PM accumulates in the SCRF. In an exhaust gas purification system including an SCRF, therefore, filter regeneration processing is executed. Filter regeneration processing is processing for removing the PM accumulated in the SCRF by oxidizing the PM. The filter regeneration processing is realized by supplying fuel to a pre-catalyst having an oxidation function, which is provided in the exhaust passage on the upstream side of the SCRF. When the fuel is oxidized in the pre-catalyst, the exhaust gas flowing into the SCRF is heated by oxidation heat. As a result, a temperature of the SCRF can be increased to a filter

regeneration temperature at which oxidation of the PM is promoted.

Patent Literature 2 discloses a technique for reducing an amount of ammonia supplied to an SCRF prior to thermal regeneration (filter regeneration) of the SCRF. According to this technique, an amount of ammonia adsorbed to the SCR catalyst can be reduced before the SCRF is thermally regenerated. As a result, ammonia discharge accompanying thermal regeneration of the SCRF can be suppressed.

Further, Patent Literature 3 discloses a technique in which an amount of HC adhered to an SCR catalyst provided in an exhaust passage is estimated, and when the amount of adhered HC exceeds an allowable adhesion amount, the HC is desorbed from the SCR catalyst by heating the SCR catalyst. Patent Literature 2 also discloses a technique in which heating of the SCR catalyst is stopped when the amount of HC adhered to the SCR catalyst decreases to a predetermined lower limit value after starting to heat the SCR catalyst.

### [Prior Art LITERATURES]

### [PATENT LITERATURES]

Patent Literature 1: Japanese Translation of PCT Application No. 2007-501353
Patent Literature 2: Japanese Patent Application Publication No. 2007-170388
Patent Literature 3: Japanese Patent Application Publication No. 2009-41437

### [SUMMARY OF THE INVENTION]

### [PROBLEMS TO BE SOLVED BY THE INVENTION]

Ammonia or an ammonia precursor is supplied to the SCRF. The NO_{X} contained in the exhaust gas is then reduced by the SCR catalyst carried on the SCRF using the ammonia as a reducing agent. Here, NO_{X} may be generated when the ammonia is oxidized. This NO_{X} generation must be suppressed, and therefore a catalyst having a high oxidation capacity cannot easily be carried on the SCRF. Hence, the oxidation capacity of the SCR catalyst carried on the SCRF is extremely low.

When filter regeneration processing is executed as described above, a part of the HC contained in the fuel supplied to the pre-catalyst may slip out of the pre-catalyst without being oxidized by the pre-catalyst. The HC that slips out of the pre-catalyst flows into the SCRF. As described above, the oxidation capacity of the SCR catalyst carried on the SCRF is extremely low. Therefore, when the HC flows into the SCRF, a part of the HC adheres to the SCRF. The adhered HC may remain adhered to the SCRF without being oxidized.

When HC adheres to the SCRF, an ammonia adsorption site, i.e. a site of the SCR catalyst carried on the SCRF to which ammonia should be adsorbed, is blocked by the HC. When the ammonia adsorption site is blocked by the HC, ammonia is less easily adsorbed to the SCR catalyst following completion of the filter regeneration processing. As a result, the NO_{X} purification ratio of the SCR catalyst decreases.

The present invention has been designed in consideration of the problems described above, and an object thereof is to suppress a reduction in a NO_{X} purification ratio accompanying filter regeneration processing in an exhaust gas purification system that is provided in an internal combustion engine and includes an SCRF.

### [MEANS FOR SOLVING THE PROBLEMS]

In the present invention, a temperature of the SCRF is increased by increasing a temperature of exhaust gas discharged from the internal combustion engine following completion of the filter regeneration processing, and as a result, HC adhered to the SCRF is removed.

More specifically, an exhaust gas purification system for an internal combustion engine according to the present invention includes:
a pre-catalyst that is provided in an exhaust passage of the internal combustion engine and has an oxidation function;
a fuel supply apparatus that supplies fuel to the pre-catalyst;
a filter (an SCRF) provided in the exhaust passage on a downstream side of the pre-catalyst in order to trap particulate matter contained in exhaust gas, the filter carrying a selective catalytic reduction NOx catalyst that reduces NO_{X} contained in the exhaust gas using ammonia as a reducing agent;
an ammonia supply apparatus that supplies ammonia or an ammonia precursor to the filter;
a filter regeneration processing execution unit that executes filter regeneration processing for removing the particulate matter accumulated in the filter, by supplying fuel to the pre-catalyst from the fuel supply apparatus in order to increase a temperature of the filter; and
an HC poisoning recovery processing execution unit that executes HC poisoning recovery processing for removing HC adhered to the filter after the filter regeneration processing executed by the filter regeneration processing execution unit has been terminated, by increasing a temperature of the exhaust gas discharged from the internal combustion engine in order to increase the temperature of the filter.

When the temperature of the SCRF is increased by increasing the temperature of the exhaust gas discharged from the internal combustion engine, the temperature of the SCRF can be increased while suppressing an increase in the amount of HC that flows into the SCRF. Therefore, by executing the HC poisoning recovery processing following completion of the filter regeneration processing, the HC that adheres to the SCRF during execution of the filter regeneration processing can be removed while preventing new HC from adhering to the SCRF.

Hence, a condition in which an ammonia adsorption site of the SCR catalyst carried on the SCRF remains blocked by the adhered HC can be suppressed. According to the present invention, therefore, a reduction in a NO_{X} purification ratio accompanying execution of the filter regeneration processing can be suppressed.

In the present invention, the HC poisoning recovery processing may be executed for a period corresponding to an amount of HC adhered to the SCRF at a start point of the HC poisoning recovery processing. Further, the HC poisoning recovery processing may be executed for a period corresponding to an execution period of the filter regeneration processing. According to these configurations, the execution period of the HC poisoning recovery processing can be prevented from becoming excessively long while ensuring that the HC adhered to the SCRF is removed sufficiently.

In the present invention, during the filter regeneration processing, the ammonia or the ammonia precursor may be supplied to the SCRF by the ammonia supply apparatus in an amount corresponding to the temperature of the SCRF until the temperature of the SCRF reaches a target temperature.

According to this configuration, ammonia can be adsorbed to the ammonia adsorption site of the SCR catalyst even during the filter regeneration processing until the temperature of the SCRF reaches the target temperature. Accordingly, the amount of HC that is adsorbed to the SCRF during the filter regeneration processing can be suppressed. As a result, the execution period of the HC poisoning recovery processing can be shortened.

### [ADVANTAGEOUS EFFECT OF THE INVENTION]

According to the present invention, a reduction in a NO_{X} purification ratio accompanying filter regeneration processing can be suppressed in an exhaust gas purification system that is provided in an internal combustion engine and includes an SCRF.

### [brief description of the drawings]

Fig. 1 is a schematic view showing a configuration of an intake/exhaust system of an internal combustion engine according to a first embodiment.
Fig. 2 is a flowchart showing a flow of filter regeneration processing and HC poisoning recovery processing according to the first embodiment.
Fig. 3 is a time chart showing transitions of a temperature Tf of an SCRF, a temperature Tpc of a pre-catalyst, a fuel addition amount Fadd added by a fuel addition valve, a post-injection amount Fpost injected into the internal combustion engine, an HC adhesion amount Qhc adhered to the SCRF, an ammonia gas addition amount Aadd added by an ammonia addition valve, and an ammonia adsorption amount Qam adsorbed to an SCR catalyst, when filter regeneration processing and HC poisoning recovery processing according to the first embodiment are executed.
Fig. 4 is a flowchart showing a flow of filter regeneration processing and HC poisoning recovery processing according to a modified example of the first embodiment.
Fig. 5 is a flowchart showing a flow of ammonia gas addition control executed during filter regeneration processing according to a second embodiment.
Fig. 6 is a time chart showing transitions of the temperature Tf of the SCRF, the temperature Tpc of the pre-catalyst, the fuel addition amount Fadd added by the fuel addition valve, the post-injection amount Fpost injected into the internal combustion engine, the HC adhesion amount Qhc adhered to the SCRF, the ammonia gas addition amount Aadd added by the ammonia addition valve, and the ammonia adsorption amount Qam adsorbed to the SCR catalyst, when filter regeneration processing and HC poisoning recovery processing according to the second embodiment are executed.

### [EMBODIMENTS FOR CARRYING OUT THE INVENTION]

Specific embodiments of the present invention will be described below on the basis of the drawings. Unless specified otherwise, the technical scope of the invention is not limited only to dimensions, materials, shapes, relative arrangements, and so on of constituent components described in the embodiments.

### (First Embodiment)

Here, a case in which an exhaust gas purification system for an internal combustion engine according to the present invention is applied to a diesel engine used to drive a vehicle will be described. Note, however, that the internal combustion engine according to the present invention is not limited to a diesel engine, and may be a gasoline engine or the like.

### [Schematic configuration of intake/exhaust system]

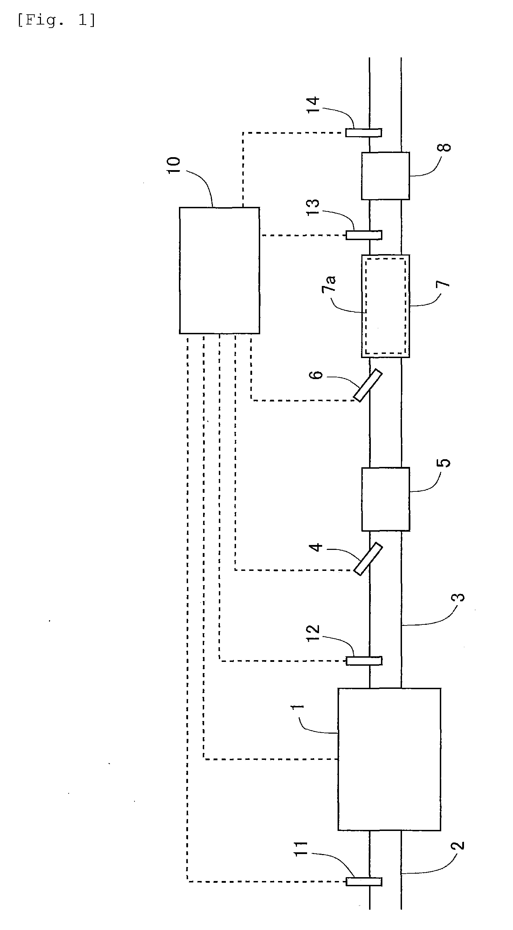

Fig. 1 is a schematic view showing a configuration of an intake/exhaust system of the internal combustion engine according to this embodiment. An internal combustion engine 1 is a diesel engine used to drive a vehicle. An intake passage 2 and an exhaust passage 3 are connected to the internal combustion engine 1. An air flow meter 11 is provided in the intake passage 2. The air flow meter 11 detects an intake air amount of the internal combustion engine 1.

A first exhaust gas temperature sensor 12, a fuel addition valve 4, a pre-catalyst 5, an ammonia addition valve 6, an SCRF 7, a second exhaust gas temperature sensor 13, a post-catalyst 8, and a third exhaust gas temperature sensor 14 are provided in the exhaust passage 3 in sequence from an upstream side of an exhaust gas flow.

The pre-catalyst 5 is an oxidation catalyst. The pre-catalyst 5 is not limited to an oxidation catalyst, however, and may be any catalyst having an oxidation function. The fuel addition valve 4 adds fuel to the exhaust gas in order to supply the fuel to the pre-catalyst 5.

Note that in this embodiment, the fuel addition valve 4 corresponds to a fuel supply apparatus according to the present invention. However, the fuel addition valve 4 may be omitted, and instead, fuel may be supplied to the pre-catalyst 5 by executing an auxiliary fuel injection in the internal combustion engine 1 at a later timing than a main fuel injection such that the fuel injected in the auxiliary fuel injection is discharged in an unburned condition into the exhaust passage 3 without contributing to combustion in a combustion chamber.

The SCRF 7 is configured such that an SCR catalyst 7a is carried on a wall-flow filter that traps PM contained in the exhaust gas. The SCR catalyst 7a reduces NO_{X} contained in the exhaust gas using ammonia as a reducing agent. The ammonia addition valve 6 adds ammonia gas to the exhaust gas in order to supply ammonia to the SCRF 7. When ammonia is supplied to the SCRF 7, the ammonia is temporarily adsorbed to an ammonia adsorption site of the SCR catalyst 7a carried on the SCRF 7. The adsorbed ammonia serves as a reducing agent so that the NO_{X} contained in the exhaust gas is reduced thereby.

Note that when ammonia is oxidized, NO_{X} may be generated. This NO_{X} generation must be suppressed, and therefore the SCR catalyst 7a carried on the SCRF 7 has an extremely low oxidation capacity.

In this embodiment, the ammonia addition valve 6 corresponds to an ammonia supply apparatus according to the present invention. Note, however, that the ammonia supply apparatus according to the present invention may be an apparatus that supplies ammonia in a liquid or solid form. Further, the ammonia supply apparatus according to the present invention may be an apparatus that supplies an ammonia precursor. For example, in this embodiment, a urea addition valve that adds a urea water solution to the exhaust gas may be provided instead of the ammonia addition valve 6. In this case, urea is supplied to the SCRF 7 as the ammonia precursor. Ammonia is then generated by hydrolyzing the urea.

The post-catalyst 8 is an oxidation catalyst. However, the post-catalyst 8 maybe another catalyst having an oxidation function. Further, the post-catalyst 8 may be a catalyst configured by combining an oxidation catalyst with an SCR catalyst that reduces the NO_{X} contained in the exhaust gas using ammonia as a reducing agent. In this case, the oxidation catalyst may be formed by carrying a precious metal such as platinum (Pt) on a carrier having aluminum oxide (Al₂O₃), zeolite, or the like, for example, as a material, and the SCR catalyst may be formed by carrying a base metal such as copper (Cu) or iron (Fe) on a carrier having zeolite as a material. By forming the post-catalyst 8 from a catalyst configured in this manner, HC, CO, and ammonia contained in the exhaust gas can be oxidized. Moreover, when NO_{X} can be generated by oxidizing a part of the ammonia, and the generated NO_{X} can be reduced using the surplus ammonia as a reducing agent.

The first exhaust gas temperature sensor 12, the second exhaust gas temperature sensor 13, and the third exhaust gas temperature sensor 14 are sensors for detecting a temperature of the exhaust gas. The first exhaust gas temperature sensor 12 detects the temperature of the exhaust gas after the exhaust gas is discharged from the internal combustion engine 1. The second exhaust gas temperature sensor 13 detects the temperature of the exhaust gas after the exhaust gas flows out of the SCRF 7. The third exhaust gas temperature sensor 14 detects the temperature of the exhaust gas after the exhaust gas flows out of the post-catalyst 8.

An electronic control unit (ECU) 10 is annexed to the internal combustion engine 1. Various sensors, such as the airflow meter 11, the first exhaust gas temperature sensor 12, the second exhaust gas temperature sensor 13, and the third exhaust gas temperature sensor 14, are electrically connected to the ECU 10. Output signals from the various sensors are input into the ECU 10. The ECU 10 estimates a flow rate of the exhaust gas flowing through the exhaust passage 3 on the basis of an output value from the air flow meter 11. Further, the ECU 10 estimates a temperature of the SCRF 7 on the basis of an output value from the second exhaust gas temperature sensor 13, and estimates a temperature of the post-catalyst 8 on the basis of an output value from the third exhaust gas temperature sensor 14.

A fuel injection valve of the internal combustion engine 1, the fuel addition valve 4, and the ammonia addition valve 6 are also electrically connected to the ECU 10. These apparatuses are thus controlled by the ECU 10.

### [Filter regeneration processing]

Trapped PM gradually accumulates in the SCRF 7. In this embodiment, therefore, filter regeneration processing is executed to remove the PM that has accumulated in the SCRF 7. The filter regeneration processing according to this embodiment is realized by adding fuel from the fuel addition valve 4 so that the fuel is supplied to the pre-catalyst 5. When the fuel is oxidized in the pre-catalyst 5, oxidation heat is generated. The exhaust gas flowing into the SCRF 7 is heated by this oxidation heat. As a result, the temperature of the SCRF 7 increases. By controlling the amount of fuel added by the fuel addition valve 4 during execution of the filter regeneration processing, the temperature of the SCRF 7 is increased to a predetermined filter regeneration temperature (650°C, for example) at which oxidation of the PM is promoted. As a result, the PM that has accumulated in the SCRF 7 is oxidized and thereby removed.

In this embodiment, the filter regeneration processing is executed every time a predetermined amount of time elapses. Note that the filter regeneration processing may be executed every time a vehicle in which the internal combustion engine 1 is installed travels a predetermined travel distance. Further, the filter regeneration processing may be executed every time the amount of PM accumulated in the SCRF 7 reaches a predetermined accumulation amount. The amount of PM accumulated in the SCRF 7 can be estimated on the basis of histories of a fuel injection amount injected into the internal combustion engine 1, a flow rate at which the exhaust gas flows into the SCRF 7, the temperature of the SCRF 7, and so on.

When the filter regeneration processing is executed as described above, a part of the HC contained in the fuel that is supplied to the pre-catalyst 5 may slip out of the pre-catalyst 5 without being oxidized in the pre-catalyst 5. The HC that slips out of the pre-catalyst 5 flows into the SCRF 7. Here, as described above, the oxidation capacity of the SCR catalyst 7a carried on the SCRF 7 is extremely low. Therefore, when the HC flows into the SCRF 7, a part of the HC adheres to the SCRF 7. The adhered HC may remain adhered to the SCRF without being oxidized. When HC adheres to the SCRF 7, the ammonia adsorption site, i.e. the site of the SCR catalyst 7a carried on the SCRF 7 to which ammonia should be adsorbed, is blocked by the HC. When the ammonia adsorption site is blocked by the HC, ammonia is less easily adsorbed to the SCR catalyst 7a following completion of the filter regeneration processing. As a result, a NO_{X} purification ratio of the SCR catalyst 7a decreases.

Hence, in this embodiment, HC poisoning recovery processing is executed following completion of the filter regeneration processing in order to remove the HC adhered to the SCRF 7. The HC poisoning recovery processing is processing for increasing the temperature of the SCRF 7 to an HC poisoning recovery temperature (650°C, for example) at which oxidation of the HC is promoted by increasing the temperature of the exhaust gas discharged from the internal combustion engine 1. The HC poisoning recovery processing is realized by executing an auxiliary fuel injection in the internal combustion engine 1 at a timing which is later than the main fuel injection and at which the fuel injected in the auxiliary fuel injection contributes to combustion in a combustion chamber. By executing the auxiliary fuel injection at this timing, the temperature of the exhaust gas discharged from the internal combustion engine 1 can be increased. The auxiliary fuel injection executed at this timing will be referred to hereafter as a post-injection.

When the temperature of the SCRF 7 is increased by increasing the temperature of the exhaust gas discharged from the internal combustion engine 1, the temperature of the SCRF 7 can be increased while suppressing an increase in the amount of HC that flows into the SCRF 7. By executing the HC poisoning recovery processing following completion of the filter regeneration processing, therefore, the HC that adheres to the SCRF 7 during the filter regeneration processing can be removed while preventing new HC from adhering to the SCRF 7.

Hence, a condition in which the ammonia adsorption site of the SCR catalyst 7a carried on the SCRF 7 remains blocked by the adhered HC can be suppressed. Accordingly, adhesion of the ammonia that serves as a reducing agent during NO_{X} reduction to the SCR catalyst 7a is not impaired by the HC. By executing the HC poisoning recovery processing following completion of the filter regeneration processing, therefore, a reduction in the NO_{X} purification ratio accompanying execution of the filter regeneration processing can be suppressed.

### [Processing flow]

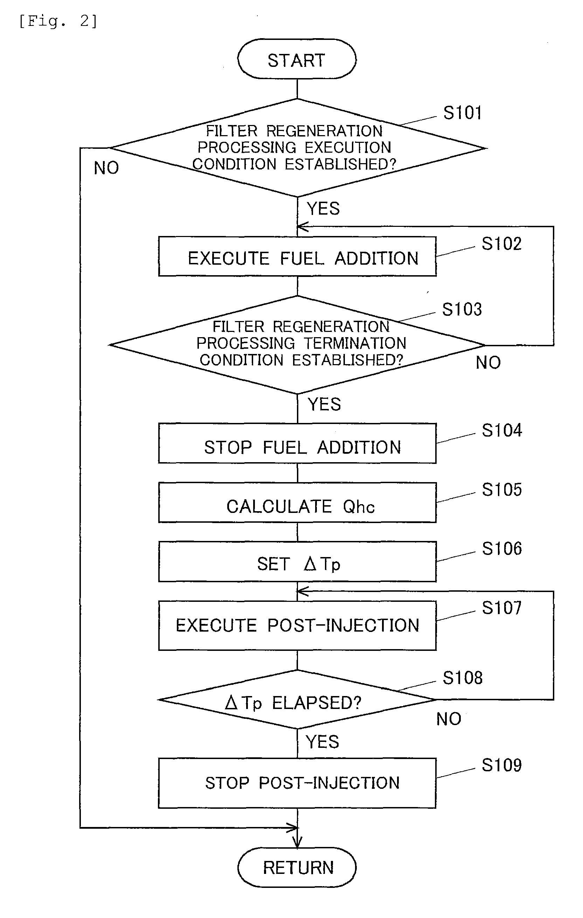

Fig. 2 is a flowchart showing a flow of the filter regeneration processing and HC poisoning recovery processing according to this embodiment. This flow is stored in the ECU 10 in advance, and executed by the ECU 10 repeatedly.

In this flow, first, in step S101, a determination is made as to whether or not a filter regeneration processing execution condition is established. In this embodiment, the filter regeneration processing execution condition is determined to be established when a predetermined time elapses following completion of the previous filter regeneration processing. When a negative determination is made in step S101, execution of the current flow is terminated. When an affirmative determination is made in step S101, on the other hand, processing of step S102 is executed.

In step S102, fuel is added by the fuel addition valve 4. In other words, the filter regeneration processing is executed. By controlling the amount of fuel added by the fuel addition valve 4 during the filter regeneration processing, the temperature of the SCRF 7 is adjusted to the filter regeneration temperature, which serves as a target temperature.

Next, in step S103, a determination is made as to whether or not a filter regeneration processing termination condition is established. In this embodiment, the filter regeneration processing termination condition is determined to be established when a predetermined regeneration execution period elapses following the start of the filter regeneration processing.

When a negative determination is made in step S103, the processing of steps S102 and S103 is executed again. When an affirmative determination is made in step S103, on the other hand, processing of step S104 is executed. In step S104, fuel addition by the fuel addition valve 4 is stopped. In other words, the filter regeneration processing is terminated.

Next, in step S105, an HC adhesion amount Qhc currently adhered to the SCRF 7 is calculated. An amount of HC that adheres to the SCRF 7 per unit time and an amount of HC that is oxidized per unit time during execution of the filter regeneration processing can be estimated on the basis of the amount of fuel added by the fuel addition valve 4, the flow rate of the exhaust gas, the temperature of the pre-catalyst 5, the temperature of the SCRF 7, and so on. By integrating these values, the HC adhesion amount Qhc adhered to the SCRF 7 can be calculated.

Next, in step S106, an execution period ΔTp of the HC poisoning recovery processing to be executed henceforth is set. Here, the execution period ΔTp of the HC poisoning recovery processing is set on the basis of the HC adhesion amount Qhc adhered to the SCRF 7. In other words, when the HC adhesion amount Qhc adhered to the SCRF 7 is large, the execution period ΔTp of the HC poisoning recovery processing is set to be shorter than when the HC adhesion amount Qhc is small. A relationship between the HC adhesion amount Qhc adhered to the SCRF 7 and the execution period ΔTp of the HC poisoning recovery processing is determined on the basis of experiments and the like. The relationship between these values is stored in advance in the ECU 10 in the form of a map or a function.

Next, in step S107, the post-injection is executed in the internal combustion engine 1. In other words, the HC poisoning recovery processing is executed. In the HC poisoning recovery processing, the temperature of the SCRF 7 is adjusted to the HC poisoning recovery temperature, which serves as a target temperature, by controlling an injection timing and an injection amount of the auxiliary fuel injection. Note that the HC poisoning recovery temperature and the filter regeneration temperature may be identical.

Next, in step S108, a determination is made as to whether or not the time ΔTp set in step S106 has elapsed following the start of the post-injection in the internal combustion engine 1, or in other words following the start of the HC poisoning recovery processing. When a negative determination is made in step S108, the processing of steps S107 and S108 is executed again. When an affirmative determination is made in step S108, on the other hand, processing of step S109 is executed. In step S109, the post-injection is stopped. In other words, the HC poisoning recovery processing is terminated.

In the flow described above, the execution period ΔTp of the HC poisoning recovery processing is set on the basis of the HC adhesion amount Qhc adhered to the SCRF 7. Accordingly, the execution period ΔTp of the HC poisoning recovery processing can be prevented from becoming excessively long while ensuring that the HC adhered to the SCRF 7 is removed sufficiently. As a result, an increase in fuel consumption accompanying execution of the HC poisoning recovery processing can be suppressed.

Note that in this embodiment, the HC poisoning recovery processing may be executed without setting the execution period of the HC poisoning recovery processing in advance. In this case, a remaining amount of HC in the SCRF 7 is estimated during execution of the HC poisoning recovery processing. The HC poisoning recovery processing may then be terminated when the estimated remaining amount of HC falls to or below a predetermined remaining amount. The amount of HC that is oxidized per unit time during execution of the HC poisoning recovery processing can be estimated on the basis of the flow rate of the exhaust gas, the temperature of the SCRF 7, and so on. The amount of HC remaining in the SCRF 7 can then be calculated by subtracting the amount of oxidized HC from the amount of HC adhered at the start of the HC poisoning recovery processing.

Further, the execution period of the HC poisoning recovery processing may be set on the basis of an execution period of the filter regeneration processing. In this case, the execution period of the HC poisoning recovery processing is set to be shorter when the execution period of the filter regeneration processing is short than when the execution period of the filter regeneration processing is long. Likewise in this case, the execution period of the HC poisoning recovery processing can be prevented from becoming excessively long while ensuring that the HC adhered to the SCRF 7 is removed sufficiently.

Furthermore, the execution period of the HC poisoning recovery processing may be set at a fixed time determined in advance. Likewise in this case, the HC that adheres to the SCRF 7 during the filter regeneration processing can be removed. From the viewpoint of suppressing an increase in fuel consumption, however, the execution period of the HC poisoning recovery processing is preferably modified in accordance with the amount of HC adhered to the SCRF 7 or the execution period of the filter regeneration processing, as described above.

Moreover, in this embodiment, an amount of PM remaining in the SCRF 7 may be estimated during execution of the filter regeneration processing. The filter regeneration processing termination condition may then be determined to be established in step S103 of the flow described above when the estimated remaining amount of PM falls to or below a predetermined remaining amount. An amount of PM that is oxidized per unit time during execution of the filter regeneration processing can be estimated on the basis of the flow rate of the exhaust gas, the temperature of the SCRF 7, and so on. The amount of PM remaining in the SCRF 7 can then be calculated by subtracting the amount of oxidized PM from the amount of PM that has accumulated at the start of the filter regeneration processing.

In this case, the predetermined remaining amount may be larger than an amount at which it is possible to determine that substantially all of the PM that can be oxidized has been removed. By setting the predetermined remaining amount at this amount, the execution period of the filter regeneration processing can be shortened in comparison with a case where an attempt is made to remove as much PM as possible. Furthermore, in this embodiment, the temperature of the SCRF 7 is adjusted to substantially identical target temperatures during both the HC poisoning recovery processing and the filter regeneration processing. Therefore, even when PM remains in the SCRF 7 at the point where the filter regeneration processing is terminated, the remaining PM can be oxidized and removed during execution of the HC poisoning recovery processing.

### [Time chart]

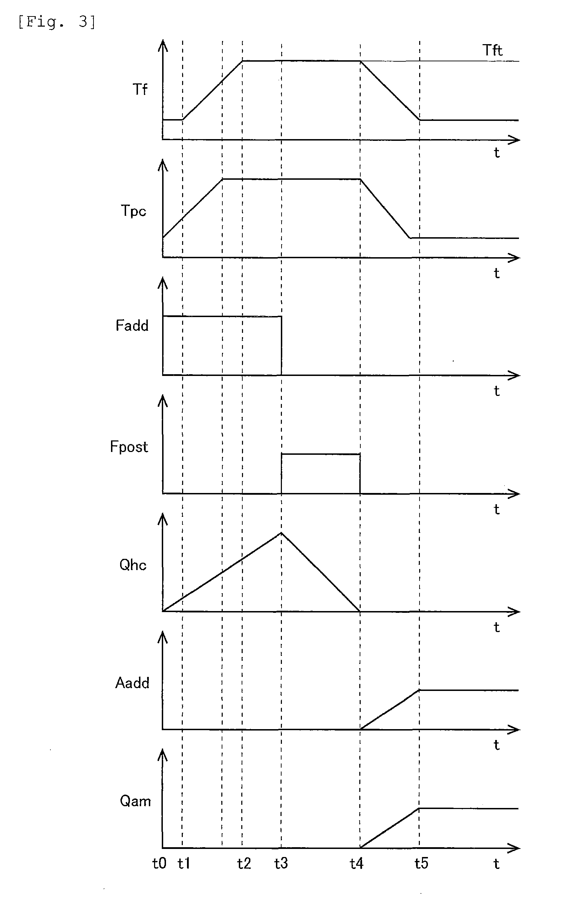

Fig. 3 is a time chart showing transitions of a temperature Tf of the SCRF 7, a temperature Tpc of the pre-catalyst 5, a fuel addition amount Fadd added by the fuel addition valve 4, a post-injection amount Fpost injected into the internal combustion engine 1, the HC adhesion amount Qhc adhered to the SCRF 7, an ammonia gas addition amount Aadd added by the ammonia addition valve 6, and an ammonia adsorption amount Qam adsorbed to the SCR catalyst 7a, when filter regeneration processing and HC poisoning recovery processing according to this embodiment are executed. In Fig. 3, the abscissa denotes a time t. Further, in Fig. 3, Tft denotes the target temperature (the filter regeneration temperature and the HC poisoning recovery temperature) of the SCRF 7 during the filter regeneration processing and the HC poisoning recovery processing.

In Fig. 3, fuel is added by the fuel addition valve 4 from a time t0 to a time t3. In other words, a period extending from the time t0 to the time t3 corresponds to the execution period of the filter regeneration processing. Therefore, from the time t0 to the time t3, the HC adhesion amount Qhc adhered to the SCRF 7 increases. Note that during this period, the temperature Tf of the SCRF 7 increases gradually from a time t1 to a time t2, and from the time t2 to the time t3, the temperature Tf of the SCRF is maintained at the target temperature (the filter regeneration temperature) Tft.

From the time t3 to a time t4, the post-injection is executed in the internal combustion engine 1. In other words, a period extending from the time t3 to the time t4 corresponds to the execution period of the HC poisoning recovery processing. During this period, the temperature Tf of the SCRF 7 is maintained at the target temperature (the HC poisoning recovery temperature), while the supply of new HC to the SCRF 7 is suppressed. Accordingly, the HC adhesion amount Qhc adhered to the SCRF 7 decreases from the time t3 to the time t4.

Note that when the temperature Tf of the SCRF 7 reaches the target temperature (the filter regeneration temperature or the HC poisoning recovery temperature) Tft, ammonia is less easily adsorbed to the SCR catalyst 7a. In this embodiment, therefore, ammonia gas addition by the ammonia addition valve 6 is stopped during execution of the filter regeneration processing and the HC poisoning recovery processing.

When the HC poisoning recovery processing is terminated at the time t4, ammonia gas addition by the ammonia addition valve 6 is resumed. At this time, the HC adhered to the SCRF 7 during execution of the filter regeneration processing is removed by executing the HC poisoning recovery processing. As a result, ammonia adsorption to the SCR catalyst 7a is promoted such that the ammonia is adsorbed more easily.

Further, when the HC poisoning recovery processing is terminated at the time t4, the temperature Tf of the SCRF 7 (in other words, the temperature of the SCR catalyst 7a) gradually decreases from the time t4 to a time t5. Accordingly, the amount of ammonia that can be adsorbed to the SCR catalyst 7a increases. From the time t4 to the time t5, therefore, the ammonia gas addition amount Aadd added by the ammonia addition valve 6 is gradually increased. As a result, the ammonia adsorption amount Qam adsorbed to the SCR catalyst 7a gradually increases from the time t4 to the time t5.

### [Modified Example]

Next, a modified example of this embodiment will be described. In this modified example, the HC adhered to the SCRF 7 is removed without executing the HC poisoning recovery processing by maintaining the temperature of the SCRF 7 at a temperature enabling oxidation of the HC after the filter regeneration processing is terminated, or in other words after fuel addition by the fuel addition valve 4 is stopped. In so doing, the need to start the HC poisoning recovery processing as soon as the filter regeneration processing is terminated can be eliminated.

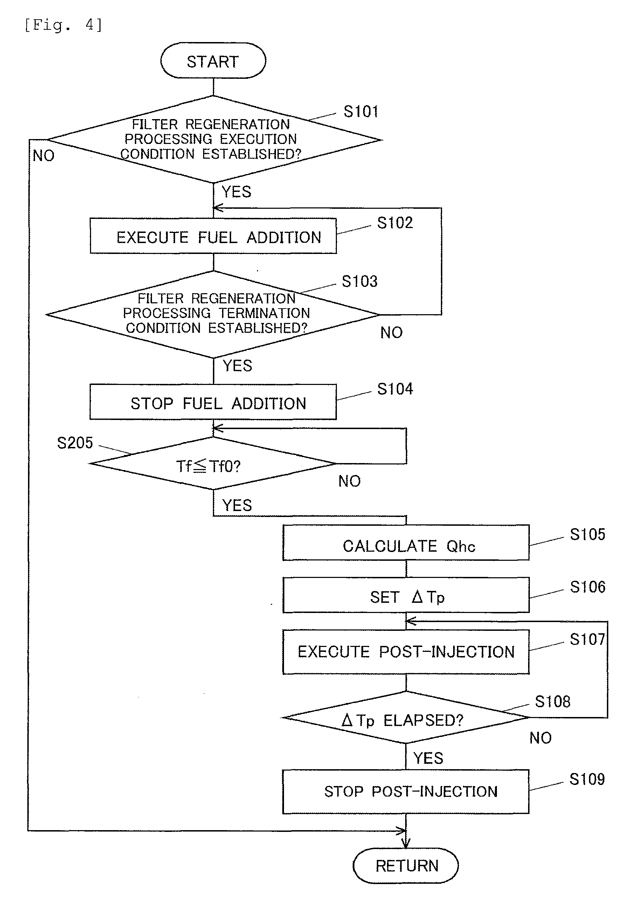

Hence, in this modified example, an execution start timing of the HC poisoning recovery processing is determined on the basis of the temperature of the SCRF 7 after the filter regeneration processing is terminated. Fig. 4 is a flowchart showing a flow of filter regeneration processing and HC poisoning recovery processing according to this modified example. In this flow, processing other than that performed in step S205 is identical to the processing of the flowchart shown in Fig. 4. Accordingly, only the processing of step S205 will be described, and description of the processing performed in the other steps will be omitted. This flow is stored in the ECU 10 in advance and executed by the ECU 10 repeatedly.

In this flow, the processing of step S205 is executed after step S104. In step S205, a determination is made as to whether or not the temperature of the SCRF 7 is equal to or lower than a predetermined processing start temperature Tf0. Here, the processing start temperature Tf0 is equal to or lower than the target temperature of the filter regeneration processing (i.e. the filter processing temperature), and equal to or higher than a lower limit value of a temperature at which the HC adhered to the SCRF 7 can be oxidized. The processing start temperature Tf0 is determined in advance on the basis of experiments and the like.

When a negative determination is made in step S104, the processing of step S104 is executed again. When an affirmative determination is made in step S104, on the other hand, the processing of step S105 is executed.

In step S105 in this case, the HC adhesion amount Qhc currently adhered to the SCRF 7 is calculated by subtracting the amount of oxidized HC following completion of the filter regeneration processing from the amount of HC adhered to the SCRF 7 at the completion point of the filter regeneration processing.

According to this modified example, the amount of HC adhered to the SCRF 7 at the start point of the HC poisoning recovery processing is reduced in comparison with a case where the HC poisoning recovery processing is started as soon as the filter regeneration processing is terminated. Therefore, the execution period ΔTp of the HC poisoning recovery processing, set in step S106, can be shortened. As a result, an increase in fuel consumption accompanying execution of the HC poisoning recovery processing can be suppressed even further.

### (Second Embodiment)

A basic configuration of an intake/exhaust system of an internal combustion engine according to this embodiment is similar to the configuration according to the first embodiment. Therefore, only differences from the first embodiment in the filter regeneration processing and HC poisoning recovery processing according to this embodiment will be described below.

As described above, when the temperature of the SCRF 7 reaches the target temperature (the filter regeneration temperature or the HC poisoning recovery temperature), ammonia is less easily adsorbed to the SCR catalyst 7a. In the first embodiment, therefore, ammonia gas addition by the ammonia addition valve 6 is stopped during execution of the filter regeneration processing and the HC poisoning recovery processing. However, ammonia can be adsorbed to the SCR catalyst 7a even during execution of the filter regeneration processing until the temperature of the SCRF 7 reaches the target temperature, or in other words while the temperature of the SCRF 7 remains lower than the target temperature. Hence, in this embodiment, ammonia gas addition by the ammonia addition valve 6 is executed during execution of the filter regeneration processing until the temperature of the SCRF 7 reaches the target temperature.

In so doing, ammonia can be adsorbed to the ammonia adsorption site of the SCR catalyst 7a during execution of the filter regeneration processing until the temperature of the SCRF 7 reaches the target temperature. Accordingly, the amount of HC that adheres to the SCRF 7 during execution of the filter regeneration processing can be reduced. As a result, the amount of HC adhered to the SCRF 7 at the completion point of the filter regeneration processing can be reduced.

Hence, according to this embodiment, the execution period of the HC poisoning recovery processing can be shortened in comparison with a case where ammonia gas addition by the ammonia addition valve 6 is stopped from the start point of the filter regeneration processing. As a result, an increase in fuel consumption accompanying execution of the HC poisoning recovery processing can be suppressed even further.

### [Flow of ammonia gas addition control]

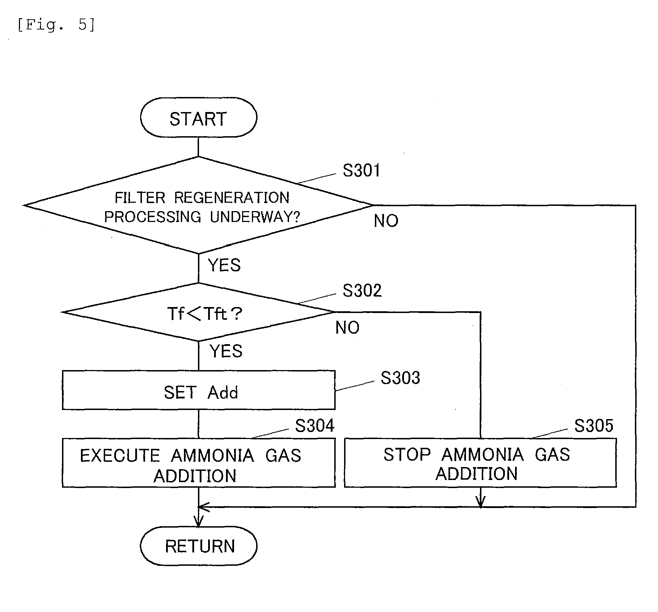

Fig. 5 is a flowchart showing a flow of ammonia gas addition control performed during the filter regeneration processing according to this embodiment. This flow is stored in the ECU 10 in advance, and executed by the ECU 10 repeatedly.

In this flow, first, in step S301, a determination is made as to whether or not the filter regeneration processing is underway. When a negative determination is made in step S301, execution of the current flow is terminated. When an affirmative determination is made in step S301, on the other hand, processing of step S302 is executed.

In step S302, a determination is made as to whether or not the temperature Tf of the SCRF 7 is lower than the target temperature (the filter regeneration temperature) Tft. When an affirmative determination is made in step S302, processing of step S303 is executed. In step S303, an ammonia gas addition amount Add to be added by the ammonia addition valve 6 is set. Here, the ammonia gas addition amount Add is set in accordance with the temperature Tf of the SCRF 7 (i.e. the temperature of the SCR catalyst 7a). More specifically, when the temperature Tf of the SCRF 7 is high, the ammonia addition amount Add is set to be smaller than when the temperature is low. A relationship between the ammonia addition amount Add and the temperature Tf of the SCRF 7 is determined on the basis of experiments and the like. The relationship between these values is stored in advance in the ECU 10 in the form of a map or a function.

Next, in step S304, ammonia is added by the ammonia addition valve 6. The amount of ammonia added at this time is adjusted to the amount set in step S303.

When, on the other hand, a negative determination is made in step S302, or in other words when the temperature of the SCRF 7 has reached the target temperature Tft, processing of step S305 is executed. In step S305, ammonia gas addition by the ammonia addition valve 6 is stopped.

According to the flow described above, in a case where ammonia gas is added by the ammonia addition valve 6 during execution of the filter regeneration processing, the amount of ammonia gas added by the ammonia addition valve 6 is gradually reduced as the temperature of the SCRF 7 increases. In so doing, a situation in which an excessive amount of ammonia gas is supplied to the SCRF 7 can be prevented from occurring. As a result, the ammonia can be prevented from flowing out of the SCRF 7.

### [Time chart]

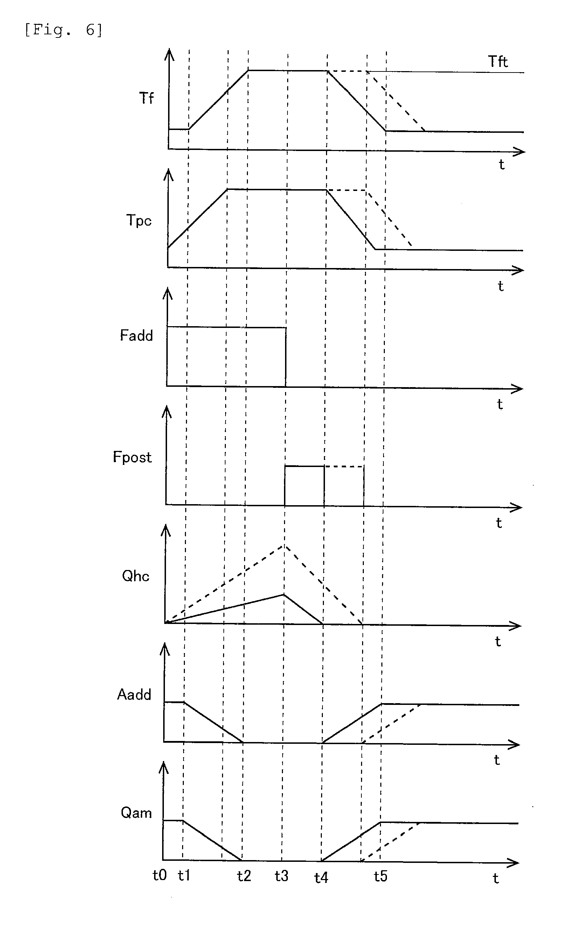

Fig. 6 is a time chart showing transitions of the temperature Tf of the SCRF 7, the temperature Tpc of the pre-catalyst 5, the fuel addition amount Fadd added by the fuel addition valve 4, the post-injection amount Fpost injected into the internal combustion engine 1, the HC adhesion amount Qhc adhered to the SCRF 7, the ammonia gas addition amount Aadd added by the ammonia addition valve 6, and the ammonia adsorption amount Qam adsorbed to the SCR catalyst 7a, filter regeneration processing and HC poisoning recovery processing according to this embodiment are executed. In Fig. 6, the abscissa denotes the time t. Further, in Fig. 6, Tft denotes the target temperature (the filter regeneration temperature and the HC poisoning recovery temperature) of the SCRF 7 during the filter regeneration processing and the HC poisoning recovery processing. Furthermore, in Fig. 6, solid lines denote the transitions of the respective values according to this embodiment, while dotted lines denote the transitions of the respective values when the filter regeneration processing and HC poisoning recovery processing according to the first embodiment are executed.

In this embodiment, ammonia gas is added by the ammonia addition valve 6 even during the period extending from the time t0 to the time t2, i.e. during execution of the filter regeneration processing. As the temperature of the SCRF 7 increases from the time t1 to the time t2, the amount of ammonia gas added by the ammonia addition valve 6 is gradually reduced. As a result, the ammonia adsorption amount Qam adsorbed to the SCR catalyst 7a at the time t2 is substantially zero.

However, ammonia is adsorbed to the ammonia adsorption site of the SCR catalyst 7a from the time t0 to the time t2, and therefore HC is less likely to adhere to the SCRF 7. Hence, the HC adhesion amount Qhc adhered to the SCRF 7 at the time t3, i.e. the termination point of the filter regeneration processing, is smaller than that of the first embodiment. Accordingly, the execution period of the HC poisoning recovery processing (the period extending from t3 to t4) can be shortened in comparison with the first embodiment.

Note that during the HC poisoning recovery processing according to the first and second embodiments, the temperature of the SCRF 7 increases to a temperature at which PM oxidation is promoted, similarly to the filter regeneration processing. However, when the temperature of the SCRF 7 is increased by increasing the temperature of the exhaust gas discharged from the internal combustion engine 1, as in the HC poisoning recovery processing, the fuel consumption increases in comparison with a case where the temperature of the SCRF 7 is increased to an identical temperature by supplying fuel to the pre-catalyst 5. To suppress an increase in the fuel consumption, therefore, the PM accumulated in the SCRF 7 is removed by performing the filter regeneration processing.

### [DESCRIPTION OF THE REFERENCE SIGNS]

1: internal combustion engine
2: intake passage
3: exhaust passage
4: fuel addition valve
5: pre-catalyst
6: ammonia addition valve
7: filter (SCRF)
7a: selective catalytic reduction NOx catalyst (SCR catalyst)
8: post-catalyst
10 ECU
11: air flow meter
12: first exhaust gas temperature sensor
13: second exhaust gas temperature sensor
14: third exhaust gas temperature sensor

## Claims

1. An exhaust gas purification system for an internal combustion engine, comprising:
a pre-catalyst that is provided in an exhaust passage of the internal combustion engine and has an oxidation function;
a fuel supply apparatus that supplies fuel to the pre-catalyst;
a filter provided in the exhaust passage on a downstream side of the pre-catalyst in order to trap particulate matter contained in exhaust gas, the filter carrying a selective catalytic reduction NOx catalyst that reduces NO_{X} contained in the exhaust gas using ammonia as a reducing agent;
an ammonia supply apparatus that supplies ammonia or an ammonia precursor to the filter;
a filter regeneration processing execution unit that executes filter regeneration processing for removing the particulate matter accumulated in the filter, by supplying fuel to the pre-catalyst from the fuel supply apparatus in order to increase a temperature of the filter; and
an HC poisoning recovery processing execution unit that executes HC poisoning recovery processing for removing HC adhered to the filter after the filter regeneration processing executed by the filter regeneration processing execution unit has been terminated, by increasing a temperature of the exhaust gas discharged from the internal combustion engine in order to increase the temperature of the filter.

2. The exhaust gas purification system for an internal combustion engine according to claim 1, wherein the HC poisoning recovery processing is executed for a period corresponding to an amount of HC adhered to the filter at a start point of the HC poisoning recovery processing.

3. The exhaust gas purification system for an internal combustion engine according to claim 1, wherein the HC poisoning recovery processing is executed for a period corresponding to an execution period of the filter regeneration processing.

4. The exhaust gas purification system for an internal combustion engine according to any one of claims 1 to 3, wherein during the filter regeneration processing, the ammonia or the ammonia precursor is supplied to the filter by the ammonia supply apparatus in an amount corresponding to the temperature of the filter until the temperature of the filter reaches a target temperature.
